# EUROPEAN PATENT APPLICATION

(11) **EP 0 570 166 A1**
(43) Date of publication of application: **18.11.1993**
(21) Application number: 93303564.4
(22) Date of filing: 07.05.1993
(51) Int. Cl.: H04B 1/12, H04B 1/10

(54) **Interference detection and cancellation system and method**

(30) Priority: 12.05.1992 US 881976
(71) Applicant: Hughes Aircraft Company, Los Angeles, California 90080-0028 (US)
(72) Inventor: Crampton, David L., Long Beach, California 90807 (US); Hahn, Carl J., Inglewood, California 90302 (US); Berman, Arnold L., Los Angeles, California 90049 (US); Thomson, James D., Manhattan Beach, California 90266 (US)
(74) Representative: Colgan, Stephen James

(57) **Abstract**

An intrusion detection and cancellation system (100) for use in a communication system having an antenna (104) and a mechanism (114) for receiving a composite signal including an input signal and an interfering signal. The invention includes an intrusion detection and cancellation receiver (102) having a first circuit (132, 134, 136, 138) for isolating the interfering signal from the composite signal to provide a first signal. A second circuit (146, 160, 162) is provided for modifying the first signal to provide a cancellation signal that is equal in magnitude and opposite in phase to the interfering signal. Finally, the cancellation signal is applied to the interfering signal for eliminating the interfering signal from the composite signal. In a preferred embodiment, composite signals are received by antenna feed elements (114) and are detected by corresponding directional couplers (126). The composite signal is directed to the receiver (102) via a beam selection switch (106) and is mixed with a local oscillator signal and narrow band filtered to isolate the interfering signal. The isolated interfering signal is subjected to amplification, attenuation and phase shifting to provide the cancellation signal which is then distributed to a power combiner (110) for canceling the interfering signal. The output signal represents the composite signal minus the interfering signal and is transmitted to a satellite repeater. Parallel receiver paths are provided for input signals of two different polarizations.

## Description

### BACKGROUND OF THE INVENTION

### Field of the Invention:

The present invention relates to communication systems. More specifically, the present invention relates to satellite communication systems which isolate and null interfering signal.

While the present invention is described herein with reference to illustrative embodiments for particular applications, it should be understood that the invention is not limited thereto. Those having ordinary skill in the art and access to the teachings provided herein will recognize additional modifications, applications and embodiments within the scope thereof and additional fields in which the present invention would be of significant utility.

### Description of the Related Art:

Commercial satellites provide point-to-point communication between subscribers via two or more earth stations. The satellites are typically positioned several thousand miles above the equator and revolve with the earth in a geosynchronous orbit. An antenna on each satellite receives signals from a specific geographical coverage region on the earth. The coverage region is generally non-circular and divided into several subregions. As an example, two earth stations can be positioned from the vantage point of the satellite as follows. A first earth station can be positioned in a receive coverage region of the satellite and a second earth station can be positioned in the transmit coverage region of the satellite.

A major problem associated with conventional satellite communication systems is the unauthorized use of the satellite. The unauthorized use can be intentional or accidental. The unauthorized use is intentional if the operator is not a subscriber, e.g., a license agreement does not exist or use fees have not been paid. However, the unauthorized use is accidental if (a) the subscriber/operator is transmitting data on a frequency other than the assigned frequency, and/or (b) the transmissions are directed toward an orbital slot other than the assigned orbital slot. Under these conditions, the use continues to be unauthorized even though the operator is a subscriber and authorized to transmit on another frequency or in another orbital slot.

False illumination of a communication satellite from a ground station most frequently occurs when an authorized earth station operator positions the microwave dish toward an orbital slot other than the assigned orbital slot. Although the data is transmitted at the assigned frequency, the operator simply points the antenna in the wrong direction. Therefore, transmitted data can be misdirected to a satellite other than the assigned satellite.

There are many communication satellites in orbit with each satellite carrying several transponders. Although these satellites are spatially separated, they operate on the same frequency bands. Therefore, "channel 6", for example, may be the same frequency range with a center frequency of, say, 6 GHz for several orbiting satellites. Hence, false illumination of a satellite other than the assigned satellite may result in interference with another subscriber authorized to transmit on "channel 6" of the satellite falsely illuminated.

Commercial communication satellites generally include a common input and receiver section in which incoming signals are processed. The input signals are separated by an input multiplexer and are thereafter directed to a plurality of transponder circuits. Each of the plurality of transponder circuits operates at a different center frequency f_{c}. Further, each input signal is routed to the particular transponder circuit operating at the center frequency f_{c} which corresponds to the frequency of the input signal. The output signals of the transponder circuits are then recombined in an output multiplexer. Thereafter, the output signals are distributed to the earth stations operating at the frequencies corresponding to the frequencies of the output signal via a transmit antenna.

Each of the recombined output signals are transmitted by the transmit antenna. Each of the components of the individual transponder circuits are generally dedicated to a single subscriber.

The construction of commercial communication satellites typically includes a plurality of antenna feed elements situated to transmit microwave energy received from an onboard reflector to the common input and receive section. The reflector is positioned to reflect the microwave energy from each of the plurality of feed elements to corresponding subregions of the coverage region on the surface of the earth. Thus, each antenna feed element corresponds to a specific subregion of the coverage region. If the path of the microwave energy of one or more feed elements to the reflector is blocked, the corresponding subregion of the coverage region on the earth is eliminated.

A conventional approach to intrusion detection and cancellation is to place a microwave switch in series with each antenna feed element. The switch provides a means to block the passage of the microwave energy from the respective feed element to the onboard reflector. This course design prevents the satellite from receiving signals from the blocked-out coverage subregion 1. However, the remaining subregions of the coverage region producing uplinks continua to have access to the satellite.

The major disadvantage of this design is that all uplinks in the blocked-out subregion 1 are denied access to the satellite. This is the case even if the unauthorized user transmits on only one of several channels producing uplinks in the affected subregion. This design does not selectively cancel the interfering signal transmitted by the unauthorized user and thus, many authorized subscribers are prevented from using the satellite. (For another reference to a system designed to prevent unauthorized signals from interfering with systems having an antenna see, "Experimental Open-Loop Canceler for Radar" by T. A. Bristow disclosed in IEEE Proc. Vol., Pts. F and H, No. 1, February, 1983.)

Thus, a need remains in the art for improvements in satellite communication systems which isolate and null interfering signals.

### SUMMARY OF THE INVENTION

The need in the art is addressed by the intrusion detection and cancellation system and method of the present invention. The invention is utilized with a communication system having an antenna and a mechanism for receiving a composite signal including an input signal and an interfering signal. The invention includes an intrusion detection and cancellation receiver having a first circuit for isolating the interfering signal from the composite signal to provide a first signal. A second circuit is provided for modifying the first signal to provide a cancellation signal that is equal in magnitude and opposite in phase to the interfering signal. Finally, the cancellation signal is applied to the interfering signal to eliminate the interfering signal from the composite signal.

In a preferred embodiment, composite signals are received by antenna feed elements and are detected by corresponding directional couplers. The composite signal is directed to the receiver via a beam selection switch and is mixed with a local oscillator signal and narrow band filtered to isolate the interfering signal. The isolated interfering signal is subjected to amplifi- cation, attenuation and phase shifting to provide the cancellation signal which is then distributed to a power combiner for canceling the interfering signal. The output signal represents the composite signal minus the interfering signal and is transmitted to a satellite repeater. Parallel receiver paths are provided for input signals of two different polarizations.

### BRIEF DESCRIPTION OF THE DRAWINGS

Fig. 1 is a simplified block diagram of an illustrative embodiment of the intrusion detection and cancellation system of the present invention showing a single transponder for processing received signals having either first or second polarizations.

Fig. 2 is a more detailed block diagram of theintrusion detection and cancellation receiver shown in the intrusion detection and cancellation system of Fig. 1.

Fig. 3 is a simplified block diagram of a filter bank utilized in the intrusion detection and cancellation receiver show in Fig. 2.

Fig. 4 is a graphical construction showing the relationship of the frequency of an interfering signal to the remaining bandwidth of a satellite channel.

Fig. 5 is a graphical construction showing the relationship of the frequency of an interfering signal to the bandwidth of the spectrum of satellite channels.

Fig. 6 is a more detailed block diagram of the intrusion detection and cancellation system of Fig. 1 showing parallel transponders for processing received signals having both first and second polarizations.

### DESCRIPTION OF THE INVENTION

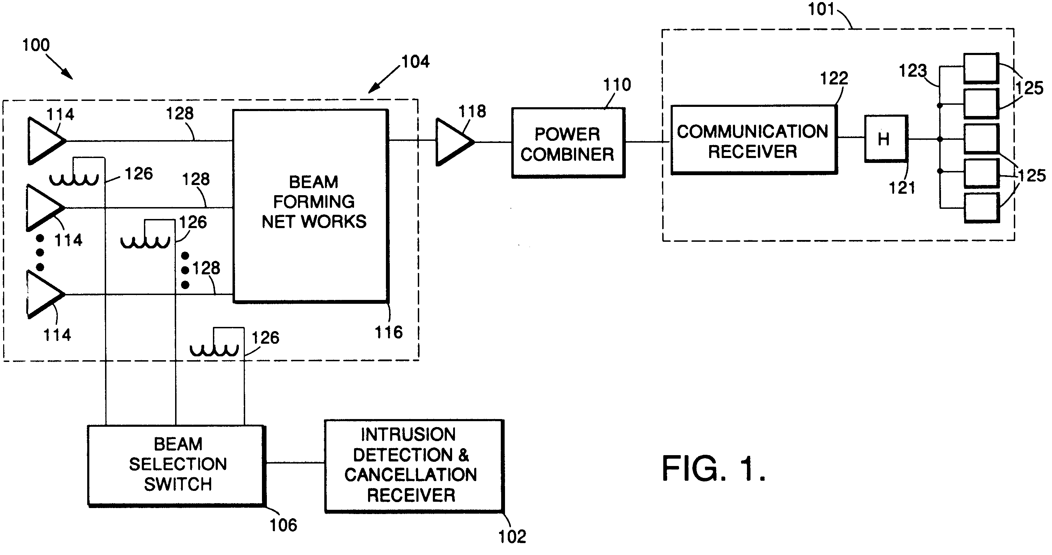

The invention is embodied in an intrusion detection and cancellation system 100 of the type having at least one intrusion detection and cancellation receiver 102 as shown in Fig. 1. The receiver 102 detects the composite input signal received by a communication satellite receive antenna 104 and generates a cancellation signal for canceling or nulling an interfering signal present in the composite input signal. The result, a composite input signal minus the interfering signal, is provided to a satellite repeater 101.

Generally, a beam selection switch 106 and the intrusion detection and cancellation receiver 102 shown in Fig. 1 cooperate to detect the composite input signal directed to the receive antenna 104, to isolate and modify the interfering signal for generating the cancellation signal, and to distribute the cancellation signal to a power combiner 110 for canceling or significantly nulling the interfering signal included in the composite input signal. Further, the intrusion detection and cancellation system 100 identifies the subregion of a coverage region on the earth from which the unauthorized interfering signal originates and prevents the unauthorized signal from interfering with most of the authorized satellite subscribers. This is accomplished without denying satellite access to most other subscribers in the subregion in which the interfering signal originates.

The receive antenna 104 is shown in Fig. 1 and includes a plurality of antenna feed elements 114 and a beam forming network 116. The antenna feed elements 114 receive the composite input signals from a plurality of earth stations (not shown). Each of the earth stations transmit from one of the subregions of the coverage region. The composite input signals arriving from the earth stations are polarized either by an orthogonal polarization "A" or an orthogonal polarization "B". The antenna feed elements 114 are, therefore, polarized to receive signals of either polarization "A" or polarization "B". If the receive antenna 104 is only capable of receiving "A" polarized signals, for example, (e.g., all antenna feed elements 114 are similarly polarized "A"), then the single intrusion detection and cancellation receiver 102 is sufficient to cancel or significantly null the interfering signal. The situation in which only "A" or "B" polarized antenna feed elements are present in receive antenna 104 is addressed in Fig. 1.

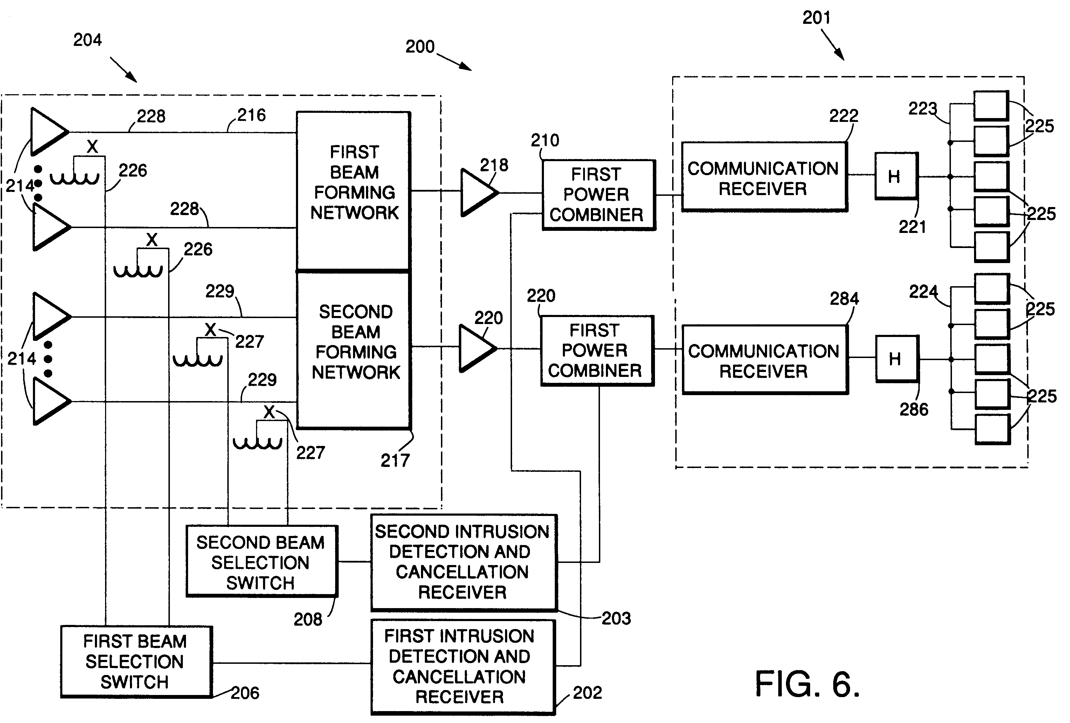

In a case in which the receive antenna 104 employs frequency reuse (e.g., both "A" and "B" polarized antenna feed elements are present), then a pair of receivers is required to cancel or significantly null the interfering signals. This condition is addressed in Fig. 6 hereinbelow.

The received composite input signals of polarization "A" are transmitted to the beam forming network 116 as shown in Fig. 1. The function of the beam forming network 116 is to combine the composite input signals in the proper amplitude and phase relationship to provide the required antenna coverage. The output signal of the beam forming network 116, corresponding to the signal received having polarization "A", is directed to a low noise amplifier 118. The low noise amplifier 118 serves to amplify the signal presented at the amplifier input terminal while introducing minimal noise in the amplified signal. The amplified signal provided by the low noise amplifier 118 is directed to the power combiner 110 as shown in Fig. 1. The power combiner 110 functions to combine the composite input signal (which includes the interfering signal) provided by the low noise amplifier 118 with the cancellation signal provided by the receiver 102. The result is a cancellation of the interfering signal in the composite signal by the cancellation signal. The cancellation signal is individually set to be equal in magnitude and opposite in phase to the interfering signal in the receiving path corresponding to the signal of orthogonal polarization "A".

The output signal of the power combiner 110 represents the composite input signal of polarization "A" received at the antenna 104 minus the interfering signal. The interference free composite input signal of polarization "A" is then directed to a communication receiver 122 of the satellite repeater 101 as shown in Fig. 1. The output signal of the communication receiver 122 is fed directly to a power divider 121 which forms the input signal to an input multiplexer 123 and a plurality of individual transponder circuits 125 of the satellite repeater 101.

The intrusion detection and cancellation system 100 forms a feed forward loop between the antenna feed elements 114 and the power combiner 110 as shown in Fig. 1. The feed forward loop includes a plurality of directional couplers 126, the beam selection switch 106 and the receiver 102. The directional coupler 126 is connected to the waveguide 128 located between each antenna feed element 114 and the beam forming network 116. The function of the directional coupler 126 is to selectively extract a signal sample of the associated composite input signal of polarization "A" received by the antenna feed elements 114. The signal sample is then transmitted to the ground commandable receiver 102 via the beam selection switch 106. Each of the individual feed elements 114 is polarized to receive only signals of polarization "A". Each directional coupler 126 is routed to and terminates in the beam selection switch 106.

Each of the antenna feed elements 114 receives a plurality of transmissions from an associated subregion of the coverage region on the surface of the earth. Each of these plurality of transmissions form a separate composite input signal of polarization "A". By operating the beam selection switch 106, the selected antenna feed element 114 is connected to the receiver 102 through the corresponding directional coupler 126. Therefore, the beam selection switch 106 controls which antenna feed element 114 and associated composite input signal of polarization "A" is connected to and sampled by the receiver 102. Thus, the beam selection switch 106 permits the entire coverage region to be monitored by the single receiver 102. The selected composite input signal of polarization "A" is thereafter narrow band filtered, amplified and phase shifted in the receiver 102 to form the cancellation signal as described hereinbelow.

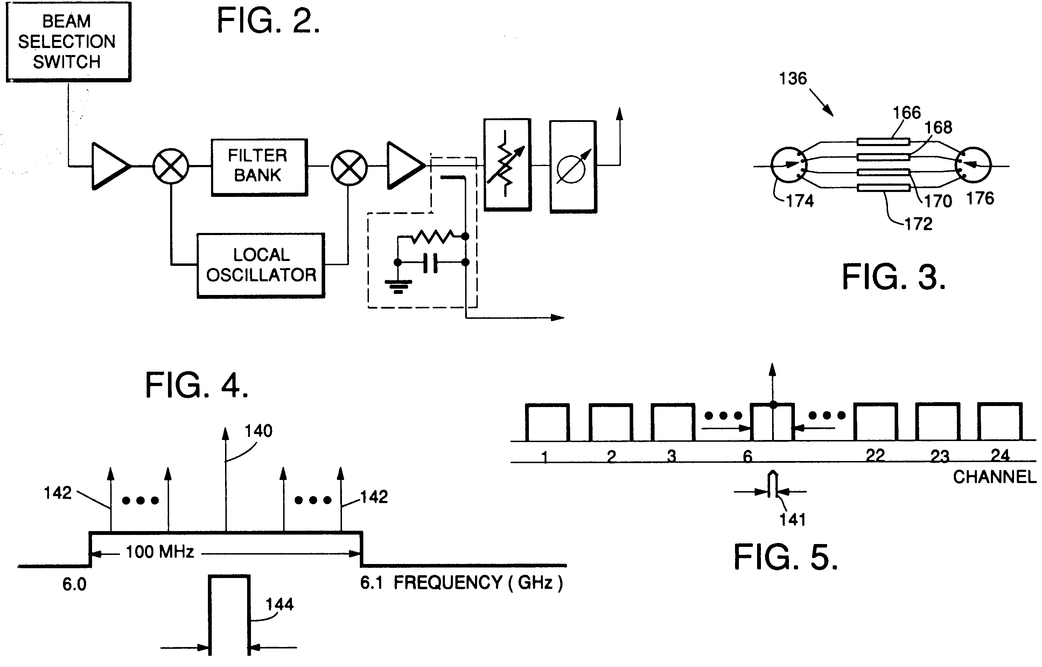

The beam selection switch 106 transmits the selected composite input signal of polarization "A" to the receiver 102 as shown in Fig. 2. The composite signal is amplified by a low noise amplifier 130 and is thereafter transmitted to a first mixer 132. The first mixer 132 also receives a frequency signal from a switchable local oscillator 134. A filter bank 136 comprised of a single set of filter elements is connected to the first mixer 132. The single set of filter elements 166, 168, 170 and 172 of the filter bank 136 is connected between a pair of switches 174 and 176. Each filter element 166, 168, 170 and 172 has a different bandwidth and the operation of the switches 174 and 176 permit the selection of a particular filter element. The output of the filter bank 136 is directed to a second mixer 138.

The second mixer 138 also receives the same frequency signal from the switchable local oscillator 134 as is received by the first mixer 132. The first and second mixers 132 and 138, the switchable oscillator 134 and the filter bank 136 serve to narrow band filter the composite input signal of polarization "A" to isolate the interfering signal. This design prevents excess noise and other signals of the composite input signal from being reinjected into the common signal path. By implementing the switchable local oscillator 134, only the single set of filter elements 166, 168, 170 and 172 is required in the filter bank 136. The frequency of the signal provided by the switchable local oscillator 134 is determined by the frequency of the interfering signal.

It should be noted that the interfering signal is transmitted at a frequency which represents only a fraction of the bandwidth of a particular channel. For example, suppose that the unauthorized interfering signal is being transmitted on channel six. Further, assume that the bandwidth of channel six extends from (6.0 - 6.1) GHz. Therefore, the frequency of the interfering signal is located somewhere within the 100 MHz of bandwidth of channel six as is shown in Fig. 4. The vertical arrow designated by numeral 140 in Fig. 4 illustrates the interfering frequency and the bandwidth of filter 136 is designated by numeral 141. It is noted that the bandwidth of filter 136 is narrower than the bandwidth of channel six. The illustration in Fig. 4 facilitates the comparison of the interfering signal to the remaining frequencies in the bandwidth of channel six designated by numeral 142. The remaining frequencies in the bandwidth are at frequencies other than the frequency of the interfering signal.

The frequency of the interfering signal represented by numeral 140 shown in Fig. 4 can be compared to the entire spectrum of channels in the satellite as shown in Fig. 5. The vertical arrow designated by numeral 140 again represents the interfering signal and the bandwidth of filter 136 is designated by numeral 141. The interfering signal is compared to the wide bandwidth of the composite signal of all satellite channels, for example, channels 1 through 24. The graphical construction of Fig. 5 represents the filtering character of the receiver 102. In order for the receiver 102 to narrow band filter the composite input signal of polarization "A" and to pass only the interfering signal, a transponder channel bandwidth of frequencies need only be inspected at one time. The receiver 102 is tuned to and thereafter isolates the interfering signal component from the composite signal as described hereinbelow.

Each individual feed element 114 in the receive antenna 104 shown in Fig. 1 typically receives transmissions from only one subregion of the coverage region. The specific subregion of origin of the interfering signal is found by determining which of the feed elements 114 receives the interfering signal. The presence of an unauthorized user in any subregion of the coverage region is detected in the earth station communications system monitor (not shown) for that subregion. This is accomplished in the communications system monitor by comparing various parameters (e.g., frequency, modulation level index, assigned recognition code, and the like) of each of the received signals in the selected composite input signal with the expected corresponding set of parameters for received signals from authorized subscribers. Each of these parameters is typically monitored on a continuing basis as part of the overall maintenance of the satellite communication system. Therefore, it is not necessary to increase the monitoring of parameters within the satellite in order to detect an unauthorized user.

The interfering signal can be traced to the subregion of origin in the following manner. The narrow band filter bank 136 is set to the center frequency and approximate bandwidth of the interfering signal as determined by the communications system monitor (not shown). Assume that a complaint has been received from an authorized subscriber noting that his satellite channel, for example channel six, is experiencing interference. Thus, it is suspected that an unauthorized user is transmitting on channel six. The operator at the earth station communications system monitor begins the troubleshooting procedure by tuning the receiver 102 to channel six. The beam selection switch 106 is then consecutively rotated through the range of channels while sampling the output signal of the filter bank 136 for signal strength. The strength of the output signal of the filter bank 136 is measured with a power telemetry monitor 144 located within the receiver 102 as shown in Fig. 2.

When the beam selection switch 106 is positioned to select the antenna feed element 114 associated with a subregion 1 from which channel six is operated, the anticipated power indication from the authorized user of channel six is detected in the monitor 144. Under normal conditions, the remaining feed elements 114 selected with the beam selection switch 106 for the remaining subregions within the coverage region should not produce a power indication in the monitor 144 when the receiver 102 is tuned to channel six. However, when the selection switch 106 is turned to, for example, the feed element 114 associated with a subregion 2 from which channels other than channel six are operated, a strong power indication on the monitor 144 is detected. The power sensed in the monitor 144 in response to the selection of the feed element 114 associated with subregion 2 indicates which antenna feed element 114 the interfering signal is received on. Since each feed element 114 corresponds to a specific subregion, then the subregion of origin of the signal that interferes with the operation of channel six and the position of the unauthorized user is established.

With the knowledge that the unauthorized interfering signal is being transmitted, for example, on channel six from subregion 2, the selection switch 106 is selected to the feed element 114 that receives signals from subregion 2. Thus, the composite input signal of polarization "A" received by the feed element 114 associated with subregion 2 is directed to the first mixer 132 shown in Fig. 2. The filter bank 136 is a tunable narrow band filter having filter elements 166, 168, 170 and 172 that passes a very limited band of frequencies. As an example, the center frequency of filter bank 136 could be 1 GHz. The signal frequency of the switchable local oscillator 134 is determined by the frequency of the interfering signal. Since the unauthorized user is transmitting on channel six, the frequency of the interfering signal is approximately 6 GHz and the associated bandwidth is approximately 100 MHz as shown in Fig. 4.

In order for the interfering signal in this example to pass through the filter bank 136, it is necessary for the frequency of the local oscillator 134 to be set 1 GHz away from the frequency of the interfering signal. The local oscillator 134 is adjusted to provide a signal frequency of approximately 5 GHz. The interfering signal frequency of approximately 6 GHz is then down converted by subtracting the 5 GHz local oscillator signal in the first mixer 132. The center frequency F_{c} of the filter bank 136 is approximately 1 GHz. The 1 GHz image signal generated by the first mixer 132 contains the information of the interfering signal and can now pass through one of the filter elements 166, 168, 170 or 172 of the filter bank 136.

After passing through the filter bank 136, the 1 GHz signal is coherently upconverted back to the original 6 GHz frequency in the second mixer 138 with the same 5 GHz signal from the local oscillator 134. The local oscillator 134 generates the signal used in both the down conversion in mixer 132 and the subsequent up conversion in mixer 138. Thus, the input and output signals of the receiver 102 are coherently related, e.g., they are phased locked at identically the same frequency. However, the output signal of the second mixer 138 is an isolated copy of the interfering signal minus the content of the remaining composite signal. The isolated copy of the interfering signal is then amplified in a gain stage 146 as shown in Fig. 2.

Positioned adjacent to the output terminal of the gain stage 146 is the power telemetry monitor 144. The monitor 144 has several functions. When working in combination with the beam selection switch 106 and the filter bank 136, the monitor 144 permits identifying the subregion of origin of the interfering signal. When the filter bank 136 is tuned to a specific channel, for example channel six, all input signals having a frequency of approximately 6 GHz (the center frequency of channel six) will pass the filter bank 136 and produce an indication in the monitor 144. Since each antenna feed element 114 receives composite input signals of polarization "A" from a specific subregion, then the feed element 114 selected by the selection switch 106 indicates the subregion from which the input signal originates. If the input signal is not received on the feed element 114 corresponding to the subregion of the authorized subscriber of channel six, or if the received signal level is different from the signal level of the authorized subscriber of channel six, then the unexpected portion of the input signal is an unauthorized interfering signal and the subregion of origin is identified. The unexpected portion of the input signal can be superimposed over the authorized input signal.

Additionally, the power telemetry monitor 144 provides an indication of the presence of the interfering signal. This is accomplished by sensing the presence of a voltage at the output terminal of the gain stage 146. The monitor 144 is comprised of a coupler 148 and a sensor 150 which can detect the presence of a voltage at the output terminal of the gain stage 146. The detection of the voltage can occur by any suitable manner known in the art, for example, as with a rectifying RF diode as shown in Fig. 2. A low pass filter connected to electrical ground is comprised of a resistor 151 and a parallel capacitor 152. The output signal of the monitor 144 is directed on a line 154 to the satellite telemetry transmitter for transmission to the earth station communications system monitor (not shown).

Following the identification and isolation process, the amplitude and phase of the interfering signal are adjusted in a commandable attenuator 160 and a commandable phase shifter 162. The purpose of adjusting the amplitude and phase of the interfering signal is to create the cancellation signal. The cancellation signal is equal in magnitude and opposite in phase in comparison to the interfering signal. Thus, the output signal of the intrusion detection and cancellation receiver 102 has been suitably processed to cancel the interfering signal component of the composite input signal. The canceling of the interfering signal by the cancellation signal occurs in the power combiner 110 in the downlink path as indicated by the communications system monitor (not shown). The structure disclosed in Figs. 1 and 2 which is designed to cancel the interfering signal can be fully implemented to operate autonomously aboard the communication satellite. Alternatively, an override mode can be included to control the cancellation process from the earth station communications system monitor (not shown).

The amplitude and phase of the isolated interfering signal in the receiver 102 must be adjusted to match that of the interfering signal. In order to accomplish this adjustment, a procedure known as "tuning" is utilized. Tuning is accomplished by a manual optimization technique commonly employed in microwave circuit technology. In particular, the operator at the earth station communications system monitor for the relevant subregion methodically ranges through the controls of the commandable attenuator 160 and the commandable phase shifter 162. The operator varies the control settings of the attenuator 160 and phase shifter 162 until a nulling effect on the interfering signal of the composite input signal is observed. The control settings are adjusted until the cancellation signal causes the interfering signal to get smaller.

After the proper adjustment setting is determined (which minimizes the interfering signal as best as possible), further adjustments may be made to tune the cancellation portion of the receiver 102. These adjustments include the selection of one of the filter elements 166, 168, 170 or 172 of the filter bank 136 which possesses a bandwidth that best matches the frequency of the interfering signal. Thereafter, the tuning process is repeated to achieve the best overall nulling of the interfering signal without disturbing other signals received from authorized subscribers. The interfering signal is then canceled or adequately nulled by the cancellation signal to eliminate the interference caused by the unauthorized user transmitting on a frequency assigned to an authorized subscriber.

The signal issuing from the output terminal of the phase shifter 162 on a line 164 is the cancellation signal. The cancellation signal is characterized by being equal in magnitude and opposite in phase to the interfering signal component of the composite input signal. The cancellation signal for the interfering signal component of the composite input signal of polarization "A" is transmitted to the power combiner 110. The canceling or nulling of the interfering signal occurs in the power combiner 110. The filtered feed forward path through the receiver 102 is transit time matched to the common signal path through the receive antenna 104. This design permits cancellation over the full bandwidth of the interfering signal. Only those signals within the passband of the selected filter element 166, 168, 170 or 172 of the filter bank 136 are canceled in the reinjection process. The composite input signal transmitted from the power combiner 110 to the communication receiver 122 shown in Fig. 1 is free of the interfering signal.

The intrusion detection and cancellation system 100 of the present invention illustrated in Figs. 1 - 5 has been directed to a receive antenna 104 capable of receiving signals of only one polarization (e.g., all antenna feed elements 114 are similarly polarized). Under these conditions, the single intrusion detection and cancellation receiver 102 is sufficient to cancel or significantly null the interfering signal. However, when the receive antenna 104 employs frequency reuse (e.g., both "A" and "B" polarized antenna feed elements are present), then a pair of receivers is required to cancel or significantly null the interfering signals. The situation in which both "A" and "B" polarized antenna feed elements are present in receive antenna is addressed in Fig. 6.

In this instance, the expanded embodiment of the intrusion detection and cancellation system is directed to dual polarized antenna feed elements as shown in Fig. 6. Components of the system shown in Fig. 6 which find substantial correspondence in structure and function to those components of Figs. 1 - 5 are designated with corresponding numerals of the two-hundred series. The intrusion detection and cancellation system 200 is of the type having a pair of intrusion detection and cancellation receivers 202 and 203. The receivers 202 and 203 each detect a composite input signal of a different polarization received by a communication satellite receive antenna 204 and each generate a separate cancellation signal for canceling or significantly nulling the interfering signal present in the composite input signal. The result, a pair of composite input signals minus the interfering signals, is provided to a satellite repeater 201.

Electromagnetic planar waves can be polarized in many different ways. An interfering signal may be improperly polarized resulting in interference with all composite input signals notwithstanding the polarized nature of the planar wave. Therefore, the intrusion detection and cancellation system 200 employs separate sets of polarized antenna feed elements in order to detect and cancel the interfering signals and to minimize their intrusive effect on the satellite repeater 201. A first plurality of antenna feed elements 214 are polarized to receive composite input signals of a first polarization, for example polarization "A". The antenna feed elements 214 are connected to a first beam forming network 216. A second plurality of antenna feed elements 215 are polarized to receive composite input signals of a second polarization, for example polarization "B". The antenna feed elements 215 are connected to a second beam forming network 217. Each of the feed elements 214 and 215 and each of the beam forming networks 216 and 217 are located within the receive antenna 204 as shown in Fig. 6.

Two composite input signals of different polarizations are independent and distinguishable from one another even though transmitted at the same frequency. Therefore, a composite input signal of polarization "A" is completely independent and distinguishable from a composite input signal of polarization "B". This is the case whether the signals of different polarizations are transmitted from the same or different geographical locations. Further, the two polarization independent composite input signals can each include the same or different interfering signals. Therefore, the receiver 200 is provided with separate polarization paths to address this situation. The first plurality of antenna feed elements 214 which is polarized to receive composite input signals of polarization "A" serves as an entry point to a first polarization path. Likewise, the second plurality of antenna feed elements 215 which is polarized to receive composite input signals of polarization "B" serves as an entry point to a second polarization path.

The separate polarization paths are shown in Fig. 6 and are identified as the first polarization path 280 and the second polarization path 282. The components of the first and second polarization paths 280 and 282 include a first and second plurality of directional couplers 226 and 227, respectively, first and second beam selection switches 206 and 208, respectively, the first and second intrusion detection and cancellation receivers 202 and 203, respectively, and the first and second power combiners 210 and 212, respectively.

The components of the common signal path shown in Fig. 6 include the first and second plurality of antenna feed elements 214 and 215, respectively, a first and second plurality of waveguides 228 and 229, respectively, the first and second beam forming networks 216 and 217, respectively, first and second low noise amplifiers 218 and 220, respectively, first and second power combiners 210 and 212 (also included in the first and second polarization paths 280 and 282) and the satellite repeater 201. The satellite repeater 201 includes first and second communication receivers 222 and 284, respectively, first and second power dividers 221 and 286, respectively, first and second input multiplexers 223 and 224, respectively, and a first and second plurality of transponder circuits 225 and 288.

It is noted that the components of each of the first and second polarization paths 280 and 282 and the common signal path of the intrusion detection and cancellation system 200 serve the same function as those corresponding components in the intrusion detection and cancellation system 100 disclosed in Fig. 1. However, each component in the intrusion detection and cancellation system 100 is duplicated in the intrusion detection and cancellation system 200 to accommodate the composite input signals of both polarizations "A" and "B". The dual polarization design enables the present invention to detect and cancel interfering signals of either polarization "A" or "B" included in the composite input signals.

The composite input signals of polarizations "A" and "B" received at antenna feed elements 214 and 215 are transmitted to beam forming networks 216 and 217, respectively, as shown in Fig. 6. The first and second directional couplers 226 and 227 serve to selectively extract a signal sample of the associated composite input signals of polarizations "A" and "B" respectively received by the antenna feed elements 214 and 215. Selected signal samples are then transmitted to the ground commandable receivers 202 and 203 via the beam selection switches 206 and 208, respectively. Each of the receivers 202 and 203 thereafter narrow band filter, amplify and phase shift the selected composite input signals of polarizations "A" and "B", respectively, to form first and second cancellation signals in a manner duplicate to that described with respect to Fig. 2. The first and second cancellation signals are then transmitted to the first and second power combiners 210 and 212, respectively. The power combiners 210 and 212 function to combine the composite input signals of polarizations "A" and "B" transmitted from the beam forming networks 216 and 217 with the first and second cancellation signals. The output signals of the power combiners 210 and 212 represent the composite input signals of polarizations "A" and "B" received at the antenna feed elements 214 and 215 minus the interfering signals. The interference free composite input signals of polarizations "A" and "B" are then directed to the satellite repeater 201 as shown in Fig. 6.

The cancellation signal of the intrusion detection and cancellation system 100 nulls only the interfering signal at a particular frequency within a particular subregion of coverage region on the surface of the earth. The present invention accomplishes selective cancellation of the interfering signal and does not interfere with other authorized subscribers of the communication satellite if: (a) the authorized subscribers operating at the nulled frequency are located outside of the beamwidth of the feed element 114 (e.g., the subregion) being used for cancellation; or (b) the authorized subscribers are operating at a frequency other than the nulled frequency and are located anywhere in the coverage region. Only the very narrow band of frequencies occupied by the interfering signal is canceled by the novel construction and method of the intrusion detection and cancellation system 100. Most of the remaining satellite communication frequencies are operative.

If subsequently another interfering signal originates from another subregion within the coverage region or if a new interfering signal originates in the same subregion, then the particular subregion is identified according to the antenna feed element 214 or 215 on which the interfering signal is received. This is accomplished by repositioning the selection switch 206 or 208 to the proper feed element 214 or 215, respectively. Then, the filter bank 136 is retuned in accordance with the interfering frequency determined by the communications system monitor. Thereafter, the attenuator 160 and the phase shifter 162 are readjusted to provide a suitable cancellation signal.

The ability to null an interfering signal transmitted by an unauthorized user is predicated upon the interfering signal originating from a subregion other than the subregion from which an authorized subscriber signal of the same frequency originates. When this condition is satisfied, the unauthorized interfering signal and the authorized subscriber signal are received by different antenna feed elements 214 or 215. If the interfering signal and the subscriber signal of the same frequency originate from the same subregion, the intrusion detection and cancellation system 200 is somewhat less effective.

If both the interfering signal and the subscriber signal were transmitted in the same narrow bandwidth of frequencies, e.g., (6.0 - 6.1) GHz as shown in Fig. 4, both signals would be received at the same feed element 214 or 215, respectively. The filter element 166, 168, 170 or 172 of the filter bank 136 of the relevant receiver (e.g., determined by the signal polarization) would be selected to best match the spectrum of the interfering signal. Signals outside of the bandwidth of the selected filter element would be unaffected. However, for signals within the bandwidth of the selected filter element, the nulling of the interfering signal by the present invention would also null the authorized subscriber signal originating in the same subregion. This situation would allow partial utilization of the transponder channel interfered with. Additionally, the implementation of the intrusion detection and cancellation system 100 will cause some small degradation to the noise level in the common signal path.

The present invention employs at least one feed forward loop in the antenna section of a commercial satellite. Each feed forward loop includes an intrusion detection and cancellation receiver capable of isolating and modifying an interfering signal component of a composite input signal. Each receiver provides a cancellation signal which is utilized to cancel a corresponding interfering signal in the common signal path. Further, the components of each feed forward loop permit the identification of the particular subregion in the coverage region from which the unauthorized user is transmitting the particular interfering signal and further prevents the unauthorized user from utilizing the satellite. The present invention selectively cancels the interfering signal transmitted by the unauthorized user. These advantageous features of the present invention are provided without denying satellite access to most of the authorized subscribers in the subregion of origin of the interfering signal. Thus, the resources of the satellite are protected from either intentional or accidental unauthorized use.

Thus, the present invention has been described herein with reference to a particular embodiment for a particular application. Those having ordinary skill in the art and access to the present teachings will recognize additional modifications, applications and embodiments within the scope thereof. Although the detailed description is directed to a specific structural embodiment of the intrusion detection and cancellation receiver, the method of the present invention is equally applicable to other equivalent embodiments.

It is therefore intended by the appended claims to cover any and all such modifications, applications and embodiments within the scope of the present invention.

## Claims

1. An intrusion detection and cancellation system for use with a conmunication system having an antenna and means for receiving a composite signal including an input signal and an interfering signal, said intrusion detection and cancellation system comprising:
means for isolating said interfering signal from said composite signal to provide a first signal;
means for modifying said first signal to provide a cancellation signal equal in magnitude and opposite in phase to said interfering signal; and
means for applying said cancellation signal to said interfering signal to eliminate said interfering signal from said composite signal.

2. The intrusion detection and cancellation system of Claim 1 wherein said means for isolating said interfering signal includes a tunable narrow band filter bank.

3. The intrusion detection and cancellation system of Claim 2 further including means for selecting a single filter from said tunable narrow band filter bank, said single filter having the narrowest bandwidth for passing said interfering signal.

4. The intrusion detection and cancellation system of Claim 1 wherein said means for isolating said interfering signal includes an adjustable local oscillator.

5. The intrusion detection and cancellation system of Claim 1 wherein said means for isolating said interfering signal includes a plurality of mixers.

6. The intrusion detection and cancellation system of Claim 1 wherein said means for modifying said first signal includes an amplifier.

7. The intrusion detection and cancellation system of Claim 1 wherein said means for modifying said first signal includes an adjustable attenuator.

8. The intrusion detection and cancellation system of Claim 1 wherein said means for modifying said first signal includes a phase shifter.

9. The intrusion detection and cancellation system of Claim 1 further including a beam selection switch for selecting said composite signal including said interfering signal from said receiving means.

10. An intrusion detection and cancellation system for use with a communication system having an antenna and means for receiving a pair of composite signals, each composite signal including a polarized input signal and an interfering signal, said intrusion detection and cancellation system comprising:
means for isolating said interfering signals from said pair of composite signals to provide first and second signals;
means for modifying said first and second signals to provide a pair of cancellation signals equal in magnitude and opposite in phase to said interfering signals; and
means for applying said pair of cancellation signals to said interfering signals to eliminate said interfering signals from said pair of composite signals.
